# EUROPÄISCHE PATENTSCHRIFT

(11) **EP 3 307 602 B1**
(45) Veröffentlichungstag und Bekanntmachung des Hinweises auf die Patenterteilung: **22.05.2019**
(21) Anmeldenummer: 16726882.0
(22) Anmeldetag: 03.06.2016
(51) Int. Cl.: B62B 3/00, B62B 5/02, B60G 3/02, B60B 33/04

(54) **TRANSPORTWAGEN**
TRANSPORT TROLLEY
CHARIOT TRANSPORTEUR

(30) Priorität: 10.06.2015 DE 102015210613
(43) Veröffentlichungstag der Anmeldung: 18.04.2018
(73) Patentinhaber: ThyssenKrupp Marine Systems GmbH, 24143 Kiel (DE); thyssenkrupp AG, 45143 Essen (DE)
(72) Erfinder: POPALL, Christian, 25479 Ellerau (DE)
(74) Vertreter: thyssenkrupp Intellectual Property GmbH
(86) Internationale Anmeldenummer: PCT/EP2016/062674
(87) Internationale Veröffentlichungsnummer: WO 2016/198336

(56) Entgegenhaltungen:
- DE-B3-102014 110 914
- DE-C1- 3 734 902
- KR-Y1- 200 466 376
- US-A1- 2013 069 334

## Beschreibung

Die Erfindung betrifft einen Transportwagen zum Transport schwerer Lasten über Hindernisse.

Es ergibt sich oft das Problem, schwere Lasten über Hindernisse zu transportieren. Beispiele hierfür sind der Transport über ein Süll an Bord eines Schiffes oder Eisenbahnschienen. Beispielhaft sei der Transport eines Torpedos an Bord eines Schiffes, insbesondere eines Unterseeboots genannt. Torpedos sind vergleichsweise schwer. Beim Transport durch ein Schott ist der Durchgang nicht eben, sondern durch einen senkrechten Teil, genannt Süll, behindert. Um dieses Hindernis zu überwinden wird die Last, beispielsweise der Torpedo mittels Hebegeschirr schwebend transportiert und auf der anderen Seite wieder auf einen Transportwagen abgesenkt. Alternativ können für den Transport Rampen angelegt werden. In beiden Fällen muss die schwere Last angehoben und somit potentielle Energie aufgewendet werden.

Aus der DE 10 2014 110 914 ist ein Transportwagen mit federgelagerten Rädern bekannt.

Aus der KR 200 466 376 Y1 ist ein Transportwagen gemäß dem Oberbegriff von Anspruch bekannt, welcher klappbare Laufrollen aufweist, um Ladung über Schwellen zu transportieren.

Aufgabe der Erfindung ist es, einen Transportwagen zu schaffen, welcher auch bei großen Belastungen stabil ist und dennoch einen ebenen Transport über Hindernisse hinweg ermöglicht.

Gelöst wird diese Aufgabe durch einen Transportwagen mit den in Anspruch 1 angegebenen Merkmalen. Vorteilhafte Weiterbildungen ergeben sich aus den Unteransprüchen, der nachfolgenden Beschreibung sowie den Zeichnungen.

Der erfindungsgemäße Transportwagen weist wenigstens vier Rädern auf, wobei jedes Rad über eine Klappvorrichtung klappbar gelagert ist. Die Klappvorrichtung weist eine Rotationsachse auf, das Rad ist um die Rotationsachse klappbar. Das Rad ist über eine Verbindungsvorrichtung mit der Rotationsachse verbunden, wobei die Verbindungsvorrichtung im Bereich der Rotationsachse eine Erhöhung aufweist. Die Klappvorrichtung weist wenigstens eine Feder und eine Haltevorrichtung auf, wobei die Haltevorrichtung beweglich ist. Die Haltevorrichtung wird durch die wenigstens eine Feder in Richtung der Rotationsachse gedrückt. Die Haltevorrichtung weist eine Vertiefung auf, wobei die Vertiefung der Haltevorrichtung zur Aufnahme der Erhöhung der Verbindungsvorrichtung ausgebildet ist.

Wird dieser Transportwagen gegen ein Hindernis geschoben, so wird auf das Rad, welches gegen das Hindernis stößt, eine Kraft ausgeübt. Übersteigt diese Kraft eine Grenze, welche durch die Kraft der Feder bestimmt wird, so kann die Erhöhung der Verbindungsvorrichtung aus der Vertiefung der Haltevorrichtung und somit das Rad abgeklappt werden. Hierdurch kann der Transportwagen über das Hindernis geschoben werden. Hinter dem Hindernis wird das Rad durch die Feder wieder in die Ausgangsposition gebracht.

Hierdurch kann eine schwere Last auch über ein Hindernis transportiert werden, ohne dass diese angehoben werden muss.

In einer weiteren Ausführungsform der Erfindung weisen die Vertiefung der Haltevorrichtung und die Erhöhung der Verbindungsvorrichtung entlang der Klapprichtung einen Querschnitt in Form einen Kreisausschnitts auf. Vorzugsweise weisen die Vertiefung der Haltevorrichtung und die Erhöhung der Verbindungsvorrichtung einen identischen Radius auf. Vorteil der kreisförmigen Ausführung ist die leichte Bewegbarkeit bei gleichzeitig guter Stabilisierung. Die Erhöhung kann so besonders leicht aus der Vertiefung gleiten. Haben beide den gleichen Radius, so wird die Kontaktfläche zwischen Erhöhung und Vertiefung optimiert und so eine maximale Stabilisierung erreicht.

In einer weiteren Ausführungsform der Erfindung weist die Haltevorrichtung in den Bereichen außerhalb der Vertiefung einen Querschnitt in Form einen Kreisausschnitts auf, wobei der Radius der Entfernung des obersten Endes der Erhöhung der Verbindungsvorrichtung zum Rotationsachse entspricht. Hierdurch ist ein Abklappen des Rades besonders gut möglich.

In einer weiteren Ausführungsform der Erfindung weist die Klappvorrichtung zwei Federn auf, wobei die beiden Federn symmetrisch auf die Haltevorrichtung einwirken.

In einer weiteren Ausführungsform der Erfindung weist der Transportwagen acht Räder auf. Zwar kann der Transpostwagen jede Anzahl von wenigstens vier Rädern aufweisen, eine Anordnung von vier Radpaaren ist jedoch bevorzugt, um schwere Lasten, beispielsweise einen Torpedo, zu transportieren. Bevorzugt klappen dann jeweils zwei Räder eines Paares gleichzeitig ab.

In einer weiteren Ausführungsform der Erfindung ist die Federkraft der wenigstens einen Feder einstellbar. Durch die Einstellbarkeit kann der Transportwagen an unterschiedliche Umgebungen, beispielsweise unterschiedliche Hindernisse, oder unterschiedliche Lasten mit unterschiedlichem Gewicht angepasst werden. Besonders bevorzugt kann die Federkraft mittels einer Schraube eingestellt werden.

In einer weiteren Ausführungsform der Erfindung sind die Räder in Längsrichtung des Transportwagens klappbar.

Nachfolgend ist der erfindungsgemäße Transportwagen anhand eines in den Zeichnungen dargestellten Ausführungsbeispiels näher erläutert.
- Fig. 1: Transportwagen mit aufliegendem Torpedo
- Fig. 2: leerer Transportwagen
- Fig. 3: Darstellung eines Rades vor einem Hindernis
- Fig. 4: Rad in abgeklappter Position über einem Hindernis

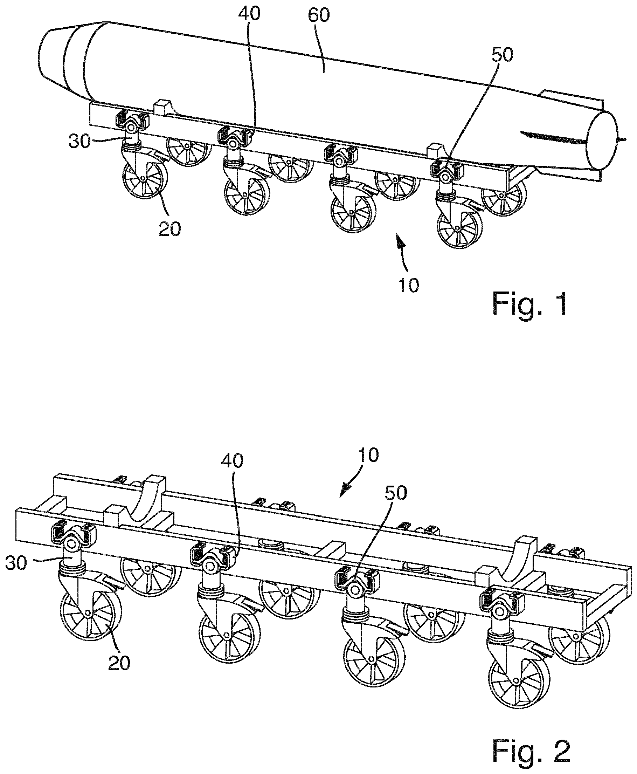

In Fig. 1 ist ein mit einem Torpedo 60 beladener Transportwagen 10 dargestellt. Der Transportwagen 10 weist acht Räder 20, welche jeweils über eine Verbindungsvorrichtung 30 klappbar verbunden sind. Hierzu weist der Transportwagen 10 acht Klappvorrichtungen 40 auf, welche jeweils eine Haltevorrichtung 50 aufweisen. Fig. 2 zeigt den Transportwagen aus Fig. 1 ohne Torpedo.

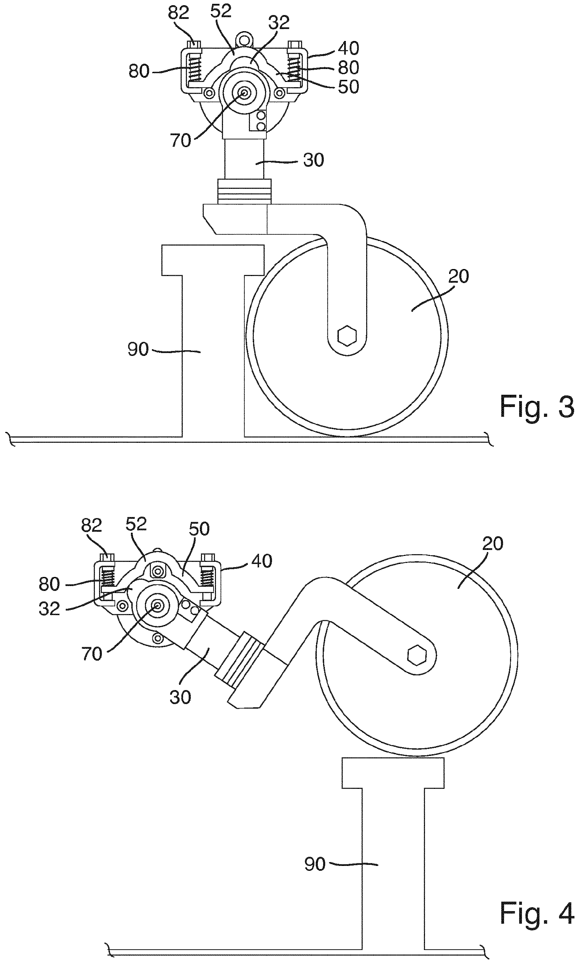

In Fig. 3 und Fig. 4 sind das Rad 20 und der Klappmechanismus vergrößert dargestellt, wobei das Rad 20 in Fig. 3 in senkrechter Position vor einem Hindernis 90 dargestellt ist und in Fig. 4 abgeklappt oberhalb des Hindernisses 90.

Das Rad 20 ist über eine Verbindungsvorrichtung 30 um eine Rotationsachse 70 klappbar mit dem (hier nicht gezeigten) Transportwagen 10 verbunden. Um das Rad 20 unter normalen Bedingungen in einer senkrechten Position zu halten, weist die Verbindungsvorrichtung 30 eine Erhöhung 32 auf, welche in eine Vertiefung 52 der Haltevorrichtung 50 eingreift. Die Haltevorrichtung 50 wird durch zwei Federn 80 an das untere Ende der Klappvorrichtung 40 gepresst. Ohne erhöhte seitliche Belastung des Rades 20 bleibt dieses so stabil in der senkrechten Position.

Kommt es zu einer erhöhten seitlichen Belastung auf das Rad 20, beispielsweise durch das Hindernis 90, so wird diese Kraft auch auf die Erhöhung 32 übertragen. Diese drückt seitlich gegen die Vertiefung 52 der Haltevorrichtung 50. Übersteigt diese Kraft die durch die Federn 80 erzeugte Kraft, welche mittels der Schrauben 82 einstellbar sein kann, so drückt die Erhöhung 32 die Haltevorrichtung 50 nach oben und die Verbindungsvorrichtung 30 und das Rad 20 klappen nach oben. Hierdurch kann das Rad 20 über das Hindernis 90 gelangen. Hinter dem Hindernis 90 führt die rückstellende Kraft der Federn 80 zusammen mit der auf das Rad 20 wirkenden Schwerkraft dazu, dass die Erhöhung 32 zurück in die Vertiefung 52 und somit das Rad 20 wieder in die senkrechte Position gebracht wird.

### Bezugszeichen

- 10: Transportwagen
- 20: Rad
- 30: Verbindungsvorrichtung
- 32: Erhöhung
- 40: Klappvorrichtung
- 50: Haltevorrichtung
- 52: Vertiefung
- 60: Torpedo
- 70: Rotationsachse
- 80: Feder
- 82: Schraube
- 90: Hindernis

## Patentansprüche

1. Transportwagen (10) mit wenigstens vier Rädern, wobei jedes Rad (20) über eine Klappvorrichtung (40) klappbar gelagert ist, wobei die Klappvorrichtung (40) eine Rotationsachse (70) aufweist und das Rad (20) um die Rotationsachse (70) klappbar ist, wobei das Rad (20) über eine Verbindungsvorrichtung (30) mit der Rotationsachse (70) verbunden ist, wobei die Klappvorrichtung (40) wenigstens eine Feder (80) und eine Haltevorrichtung (50) aufweist, wobei die Haltevorrichtung (50) beweglich ist, **dadurch gekennzeichnet, dass** die Verbindungsvorrichtung (30) im Bereich der Rotationsachse (70) eine Erhöhung (32) aufweist, wobei die Haltevorrichtung (50) durch die wenigstens eine Feder (80) in Richtung der Rotationsachse (70) gedrückt wird, wobei die Haltevorrichtung (50) eine Vertiefung (52) aufweist, wobei die Vertiefung (52) der Haltevorrichtung (50) zur Aufnahme der Erhöhung (32) der Verbindungsvorrichtung (30) ausgebildet ist.

2. Transportwagen (10) nach Anspruch 1, **dadurch gekennzeichnet, dass** die Vertiefung (52) der Haltevorrichtung (50) und die Erhöhung (32) der Verbindungsvorrichtung (30) entlang der Klapprichtung einen Querschnitt in Form einen Kreisausschnitts aufweisen.

3. Transportwagen (10) nach einem der vorstehenden Ansprüche, **dadurch gekennzeichnet, dass** die Haltevorrichtung (50) in den Bereichen außerhalb der Vertiefung (52) einen Querschnitt in Form einen Kreisausschnitts aufweist, wobei der Radius der Entfernung des obersten Endes der Erhöhung (32) der Verbindungsvorrichtung (30) zur Rotationsachse (70) entspricht.

4. Transportwagen (10) nach einem der vorstehenden Ansprüche, **dadurch gekennzeichnet, dass** die Klappvorrichtung (40) zwei Federn (80) aufweist, wobei die beiden Federn (80) symmetrisch auf die Haltevorrichtung (50) einwirken.

5. Transportwagen (10) nach einem der vorstehenden Ansprüche, **dadurch gekennzeichnet, dass** der Transportwagen (10) acht Räder aufweist.

6. Transportwagen (10) nach einem der vorstehenden Ansprüche, **dadurch gekennzeichnet, dass** die Federkraft der wenigstens einen Feder (80) einstellbar ist.

7. Transportwagen (10) nach einem der vorstehenden Ansprüche, **dadurch gekennzeichnet, dass** die Räder in Längsrichtung des Transportwagens (10) klappbar sind.

## Claims

1. Transport trolley (10) having at least four wheels, wherein each wheel (20) is mounted for swing action via a swing-action device (40), wherein the swing-action device (40) comprises a rotary spindle (70) and the wheel (20) can be swung about the rotary spindle (70), wherein the wheel (20) is connected to the rotary spindle (70) via a connecting device (30), wherein the swing-action device (40) has at least one spring (80) and a retaining device (50), wherein the retaining device (50) is movable, **characterized in that** the connecting device (30) has an elevation (32) in the region of the rotary spindle (70), wherein the retaining device (50) is pushed in the direction of the rotary spindle (70) by the at least one spring (80), wherein the retaining device (50) comprises a depression (52), and wherein the depression (52) of the retaining device (50) is designed to accommodate the elevation (32) of the connecting device (30).

2. Transport trolley (10) according to Claim 1, **characterized in that** the depression (52) of the retaining device (50) and the elevation (32) of the connecting device (30) comprise a cross section in the form of a circular segment along the direction of swing action.

3. Transport trolley (10) according to either of the preceding claims, **characterized in that** the retaining device (50) comprises a cross section in the form of a circular segment in the regions outside the depression (52), wherein the radius corresponds to the distance between the uppermost end of the elevation (32) of the connecting device (30) and the rotary spindle (70).

4. Transport trolley (10) according to one of the preceding claims, **characterized in that** the swing-action device (40) comprises two springs (80), wherein the two springs (80) act symmetrically on the retaining device (50).

5. Transport trolley (10) according to one of the preceding claims, **characterized in that** the transport trolley (10) comprises eight wheels.

6. Transport trolley (10) according to one of the preceding claims, **characterized in that** the force of the at least one spring (80) is adjustable.

7. Transport trolley (10) according to one of the preceding claims, **characterized in that** the wheels can be swung in the longitudinal direction of the transport trolley (10).

## Revendications

1. Chariot de transport (10) muni d'au moins quatre roues, dans lequel chaque roue (20) est montée de façon rabattable au moyen d'un dispositif de rabattement (40), dans lequel le dispositif de rabattement (40) présente un axe de rotation (70) et la roue (20) est rabattable autour de l'axe de rotation (70), dans lequel la roue (20) est reliée à l'axe de rotation (70) au moyen d'un dispositif de liaison (30), dans lequel le dispositif de rabattement (40) présente au moins un ressort (80) et un dispositif de maintien (50), dans lequel le dispositif de maintien (50) est mobile, **caractérisé en ce que** le dispositif de liaison (30) présente un bossage (32) dans la région de l'axe de rotation (70), dans lequel le dispositif de maintien (50) est poussé par ledit au moins un ressort (80) en direction de l'axe de rotation (70), dans lequel le dispositif de maintien (50) présente un creux (52), dans lequel le creux (52) du dispositif de maintien (50) est réalisé en vue de recevoir le bossage (32) du dispositif de liaison (30).

2. Chariot de transport (10) selon la revendication 1, **caractérisé en ce que** le creux (52) du dispositif de maintien (50) et le bossage (32) du dispositif de liaison (30) présentent le long de la direction de rabattement une section transversale ayant la forme d'une portion de cercle.

3. Chariot de transport (10) selon l'une quelconque des revendications précédentes, **caractérisé en ce que** le dispositif de maintien (50) présente dans les régions situées à l'extérieur du creux (52) une section transversale ayant la forme d'une portion de cercle, dans lequel le rayon correspond à la distance entre l'extrémité supérieure du bossage (32) du dispositif de liaison (30) et l'axe de rotation (70).

4. Chariot de transport (10) selon l'une quelconque des revendications précédentes, **caractérisé en ce que** le dispositif de rabattement (40) présente deux ressorts (80), dans lequel les deux ressorts (80) agissent de façon symétrique sur le dispositif de maintien (50).

5. Chariot de transport (10) selon l'une quelconque des revendications précédentes, **caractérisé en ce que** le chariot de transport (10) présente huit roues.

6. Chariot de transport (10) selon l'une quelconque des revendications précédentes, **caractérisé en ce que** la force élastique dudit au moins un ressort (80) est réglable.

7. Chariot de transport (10) selon l'une quelconque des revendications précédentes, **caractérisé en ce que** les roues sont rabattables dans la direction longitudinale du chariot de transport (10).
